**Europäisches Patentamt**

(19) **European Patent Office**

**Office européen des brevets**

(11) Numéro de publication: **0 013 234**
**B1**

(12) **FASCICULE DE BREVET EUROPEEN**

(45) Date de publication du fascicule du brevet: **08.08.84**

(51) Int. Cl.³: **B 60 G 11/22,** B 62 B 9/18, F 16 F 1/36

(21) Numéro de dépôt: **79401056.1**

(22) Date de dépôt: **21.12.79**

(54) Bloc élastique pour la suspension du châssis d'un véhicule à vitesse lente et de faible poids, tel qu'une voiture d'enfants, et son application aux roues jumelées.

(30) Priorité: **22.12.78 FR 7836275**

(43) Date de publication de la demande:
**09.07.80 Bulletin 80/14**

(45) Mention de la délivrance du brevet:
**08.08.84 Bulletin 84/32**

(84) Etats contractants désignés:
**DE GB IT NL**

(56) Documents cités:
**FR - A - 594 519**
**FR - A - 774 499**
**FR - A - 871 501**
**FR - A - 1 165 800**
**GB - A - 605 660**
**GB - A - 788 484**
**US - A - 1 934 128**

(73) Titulaire: **SUPERGOMME**
**6, rue de la Mairie**
**Torvilliers F-10300 Sainte Savine (FR)**

(72) Inventeur: **Petitjean, Gabriel**
**6 rue de la Mairie, Torvilliers**
**F-10300 Sainte Savine (FR)**

(74) Mandataire: **Thevenet, Jean-Bruno et al,**
**Cabinet BEAU DE LOMENIE 55 rue d'Amsterdam**
**F-75008 Paris (FR)**

Courier Press, Leamington Spa, England.

## Description

La présente invention concerne un dispositif de suspension pour interposer entre un châssis d'un véhicule à vitesse lent et de faible poids, tel qu'une voiture d'enfants et un organe de roulement, du type comportant un bloc en matière élastique muni, d'une part, de moyens pour sa fixation au châssis et, d'autre part, de moyens pour sa fixation sur un axe de l'organe de roulement.

Dans un dispositif connu de ce type (brevet britannique No. 605.660) le bloc élastique est muni, d'une part, pour sa fixation sur l'axe de l'organe de roulement, d'un trou de section circulaire dans lequel l'essieu—ou axe—de l'organe de roulement est engagé avec friction, et, d'autre part, pour sa fixation au châssis du véhicule, d'un trou traversant d'axe orthogonal à celui du premier trou, ce deuxième trou recevant, avec friction, un élément du châssis.

En position de montage, les deux trous sont superposés, de sorte que le bloc élastique travaille surtout à la compression lorsqu'il absorbe les chocs verticaux qui sont les plus importants en intensité. Il en résulte que ce dispositif de suspension connu présente un pouvoir d'absorption des chocs très limité, le rendant inutilisable pour les véhicules de transport d'enfants ou de personnes.

Il est à noter que, même les chocs dits de roulis, tendant à faire basculer l'axe—ou essieu—de l'organe de roulement sont très faiblement absorbés par cette suspension connue, en raison de la forme massive du bloc et de la position relative l'un au-dessus de l'autre, des trous de ce bloc.

L'invention remédie à cet inconvénient et a notamment pour but de proposer un dispositif de suspension amortissant avec une grande souplesse, tant les chocs verticaux que les chocs de roulis subis par l'organe de roulement.

Ce but est atteint, conformément à l'invention, du fait que, en vue d'augmenter la douceur de la suspension, et d'allonger la durée de service du bloc, ce dernier présente une forme générale en L dont la branche horizontale comporte, à son extrémité libre, un perçage traversant transversal au plan médian du L, ce perçage étant destiné à être traversé par l'axe de l'organe de roulement, la branche verticale du L comportant les moyens de fixation du bloc au châssis du véhicule, moyennant quoi, lors de l'absorption par le bloc, tant des chocs verticaux, que des chocs tendant à faire basculer l'axe de l'organe de roulement, ce bloc subit des déformations réparties de façon sensiblement uniforme au moins sur toute la masse de la branche horizontale ainsi que de la partie de jonction entre les deux branches dudit L.

Avantageusement, les moyens de fixation du bloc au châssis comprennent une mortaise borgne ménagée logitudinalement dans la branche verticale du L à partir de la face de bout de cette branche, cette mortaise étant destinée à recevoir un tenon correspondant du châssis du véhicule.

Avantageusement, dans le cas où l'organe de roulement est du type pivotant autour d'un axe vertical, les moyens de fixation du bloc au châssis comprennent un axe rigide ancré dans la branche verticale du L et s'étendant à l'extérieur et le prolongement de cette branche verticale au-delà de la face de bout de cette dernière, cet axe étant destiné à coopérer avec un palier de pivotemet et de butée du châssis.

Avantageusement, la mortaise borgne ou l'axe rigide s'étend orthogonalement par rapport au perçage transversal de la branche horizontale du L.

Avantageusement, les deux branches du L sont de longueurs sensiblement égales.

Avantageusement, un épaississement est prévu à l'extrémité libre de chaque branche du L, du côté tourné vers l'autre branche, afin de servir de butée lorsque la totalité de la course offerte par l'élasticité du bloc a été atteinte.

Avantageusement, le bloc est réalisé d'une seule pièce par moulage en élastomère ou en caoutchouc.

Avantageusement, le perçage de la branche horizontale du L est traversé par un axe commun à deux roues jumelées disposées de part et d'autre dudit bloc.

Avantageusement, ledit bloc forme entretoise entre les moyeux desdites roues jumelées.

d'autres caractéristiques et avantages de l'invention seront mieux compris à la lecture de la description qui va suivre de deux exemples de réalisation et en ce référant aux dessins annexés dans lesquels:

— la Figure 1 est une vue en coupe transversale selon le plan I—I de la Figure 3, d'un bloc d'amortissement selon un premier mode de réalisation de l'invention;

— la Figure 2 est une vue de face d'un bloc d'amortissement selon un deuxième mode de réalisation de l'invention;

— la Figure 3 est une vue latérale selon la flèche F de la Figure 1;

— la Figure 4 est une vue latérale selon la flèche $F_1$ de la Figure 2; et

— la Figure 5 est une vue en élévation d'un ensemble de roues jumelées utilisant le bloc d'amortissement de la Figure 2.

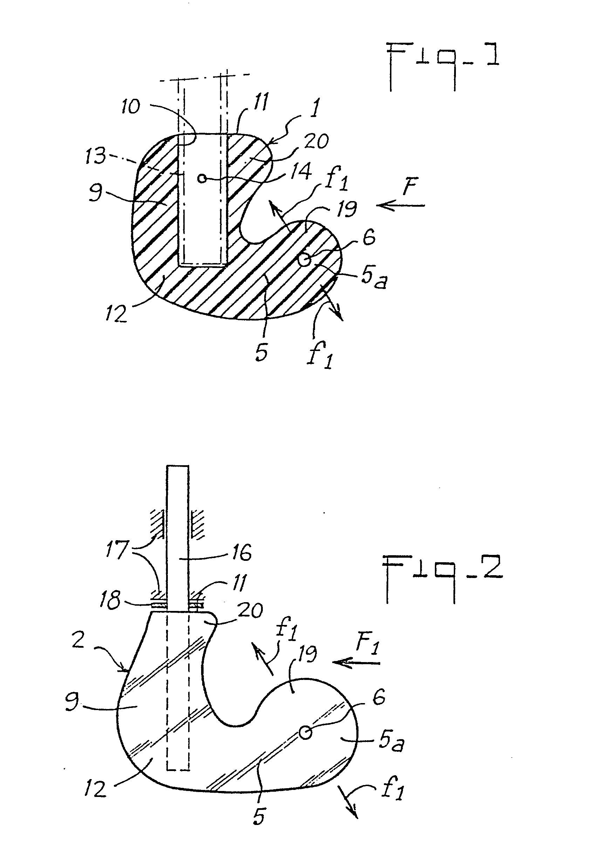

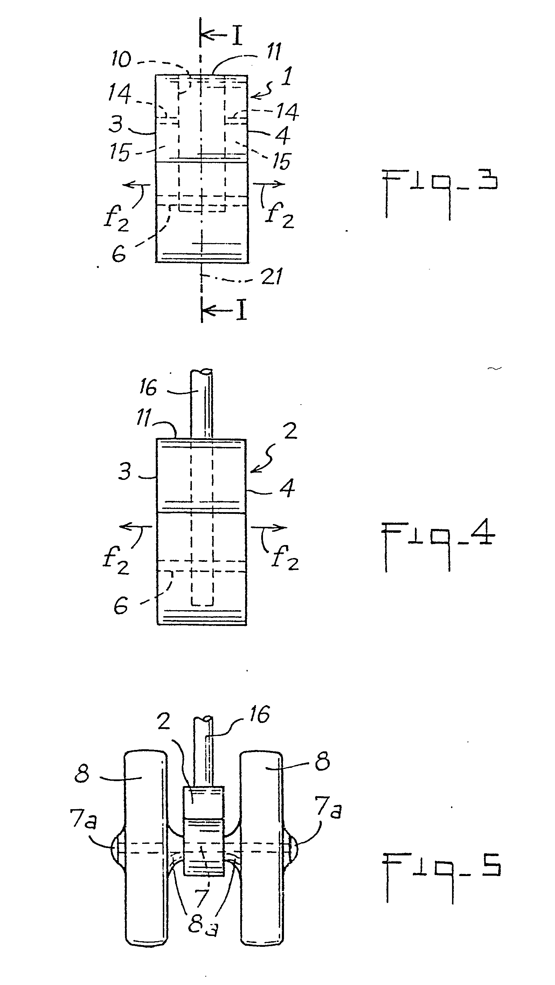

Le bloc de suspension 1, 2 représenté sur les dessins présente, vu de face, une forme générale en L (Figures 1 et 2) et, vu de profil, une silhouette rectangulaire (Figures 3 et 4). Ce bloc présente deux faces latérales opposées planes 3 et 4, ayant chacune une forme sensiblement en L épais et à contour arrondi.

L'extrémité libre 5a de la branche horizontale 5 du L est munie d'un perçage transversal 6 traversant et débouchant à chaque extrémité par une face latérale plane 3, 4, ce perçage 6 étant destiné à recevoir l'axe 7 d'un organe de roulement tel qu'une paire de roues jumelées 8 d'un véhicule léger tel que poussette d'enfant (Figure 5).

Les Figures 1 et 3 représentent un bloc de suspension 1 destiné aux organes de roulement dont le plan des roues reste fixe. La branche verticale 9 du L de ce bloc 1 est munie d'un perçage borgne—ou mortaise—10 ne débouchant à l'extérieur que par la face de bout 11 de cette branche 5; la mortaise 10 est un alésage s'étendant le long de—et dans la branche 9 jusque sensiblement la zone de jonction 12 entre les deux branches 5 et 9 du L (Figure 1). La mortaise 10 est destinée à recevoir un tenon correspondant du châssis du véhicule; ce tennon est, par exemple, l'extrémité libre 13, représentée en traits mixtes, sur la Figure 1, d'un tube métallique formant un élément du châssis—non représenté—du véhicule. L'extrémité de tube 13 est maintenue fixée dans la mortaise 10 par une goupille (non représentée) traversant l'extrémité du tube 13 par un perçage non représenté ainsi que le bloc 1 par des trous coaxiaux 14 practiqués dans la paroi 15 subsistant entre la mortaise 10 et chaque face latérale plane 3, 4 du bloc 1.

Dans le cas où l'organe de roulement est du type pouvant pivoter autour d'un axe vertical, le bloc de suspension 2 (Figures 2, 4 et 5) est muni d'un axe métallique 16 ancré dans la branche verticale 9 du L, s'étendant le long de cette branche verticale 9 et dépassant la face de bout 11 de cette branche 9; cet axe 16 est destiné à être monté dans un palier de pivotement et de butée 17 du châssis du véhicule, une rondelle 18 étant interposée entre la face de bout 11 et ce palier 17 (Figure 2).

La mortaise 10 ou l'axe 16 est orthogonal(e) au perçage 6 recevant l'axe des roues et, elle—ou il—est décalé(e) horizontalement par rapport à ce perçage 6.

Il en résulte que la branche horizontale 5 du L joue le rôle de ressort de suspension horizontal amortissant les chocs transversaux à l'axe 7 de l'organe de roulement 7, 8. En réalité l'aile horizontale 5, sour l'action de ces chocs, se déforme élastiquement de telle sorte que l'extrémité libre 5a comportant le perçage 6 se déplace par rapport à la branche verticale 9 selon sensiblement un mouvement de rotation autour d'un axe parallèle audit perçage 6 et situé au niveau de la zone de jonction 12 entre les deux branches 5, 9 du L. Sous l'action d'un choc dirigé verticalement de bas en haut, l'extrémité libre 5a va donc se rapprocher de la branche verticale 9 du L et même buter contre cette branche verticale en cas de choc violent.

Ainsi, en cas de choc violent, le bloc de suspension 1, 2 selon l'invention remplit encore son rôle d'amortisseur en formant-ou constituant—une butée élastique tout à la fois autour de l'axe 7 de l'organe de roulement 7, 8 et autour de l'élément rigide de fixation au châssis (extrémité du tube 13 ou axe de pivotement 16).

Ces butées coopèrent l'une avec l'autre.

Pour mieux remplir ce rôle, le bloc 1, 2 selon l'invention est aventageusement conformé de manière à présenter deux branches 5, 9 de longueurs sensiblement égales et on prévoit, venu de matière, à la hauteur de l'extrémité libre de chaque branche 5, 9, du côté tourné vers l'autre branche 9, 5, un épaississement 19, 20 destiné à former butée élastique recevant l'autre butée en cas de choc.

Le bloc 1, 2 est capable, non seulement d'absorber des chocs, dits de translation, tendant à imprimer un mouvement de translation transversale de l'axe 7, mais aussi des chocs dits de rotation, tendant à imprimer un mouvement de rotation de cet axe 7 autour de son milieu. Ces chocs de rotation sont dus, par exemple, à la rencontre d'un obstacle par une seule des roues jumelées 8.

Le bloc 1, 2 absorbe les chocs de translation de l'axe 7 par un mouvement de pivotement, par rapport à la branche 9, de l'extrémité 5a de la branche 5, suivant les flèches $f_1$ sur les Figures 1 et 2. Ce bloc 1, 2 absorbe les chocs de rotation de l'axe 7 par un mouvement d'oscillation latéral, par rapport à la branche 9 de l'extrémité 5a de la branche 5, suivant les flèches $f_2$ des Figures 3 et 4; ce mouvement d'oscillation latéral consiste dans un débattement angulaire, de part et d'autre d'un plan médian 21 du bloc 1, 2 au repos (Figure 3), du plan médian de l'extrémité libre 5a autour d'un axe horizontal coïncidant sensiblement avec l'axe médian longitudinal de la branche 5.

Comme on peut le voir sur la Figure 5, le bloc 2 sert également d'entretoise entre les moyeux 8a des roues jumelées 8.

Selon le mode de réalisation représenté sur la Figure 5, les deux roues jumelées 8 sont montées sur un axe commun 7 qui traverse, par une zone médiane de sa longueur, le bloc 2 par l'alésage 6. L'axe 7 présente aux deux extrémités une tête de retenue 7a coopérant chacune avec le moyeu 8a de la roue 8 adjacente.

**Revendications**

1. Dispositif de suspension à interposer entre un châssis d'un véhicule à vitesse lente et de faible poids, tel qu'une voiture d'enfants, et un organe de roulement (8), du type comportant un bloc en matière élastique (1) muni, d'une part, de moyens pour sa fixation au châssis et, d'autre part, de moyens pour sa fixation sur un axe (7) de l'organe de roulement (8), caractérisé en ce que, en vue d'augmenter la douceur de la suspension, et d'allonger la durée de service du bloc, ce dernier présente une forme générale en L dont la branche horizontale (5) comporte, à son extrémité libre (5a), un perçage traversant (6) transversal au plan médian (21) du L, ce perçage étant destiné à être traversé par l'axe (7) de l'organe de roulement (8), la branche verticale (9) du L comportant les moyens de fixation du bloc au châssis du véhicule, moyennant quoi, lors de l'absorption par le bloc tant des chocs verticaux que des chocs tendant à faire basculer l'axe de l'organe de roulement, ce bloc subit des déformations réparties de façon sensiblement uniforme au moins sur toute la masse de la branche horizontale (5) ainsi que de la partie de jonction (12) entre les deux branches dudit L.

2. Dispositif selon la revendication 1, caractérisé en ce que les moyens de fixation du bloc (1) au châssis comprennent une mortaise borgne (10) ménagée longitudinalement dans la branche verticale (9) du L à partir de la face de bout (11) de cette branche, cette mortaise étant destinée à recevoir un tenon correspondant (13 ou 16) du châssis du véhicule.

3. Dispositif selon la revendication 1, caractérisé en ce que, dans le cas où l'organe de roulement (8) est du type pivotant autour d'un axe vertical, les moyens de fixation du bloc (1) au châssis comprennent un axe rigide (16) ancré dans la branche verticale (9) du L et s'étendant à l'extérieur et le prolongement de cette branche verticale au-delà de la face de bout (11) de cette dernière, cet axe étant destiné à coopérer avec un palier de pivotement et de butée du châssis.

4. Dispositif selon l'une des revendications 2 ou 3, caractérisé en ce que la mortaise borgne (10) ou l'axe rigide (16) s'étend orthogonalement par rapport au perçage transversal (6) de la branche horizontale (5) du L.

5. Dispositif selon l'une des revendications 1 à 4, caractérisé en ce que les deux branches (5 et 9) du L sont de longueurs sensiblement égales.

6. Dispositif selon la revendication 5, caractérisé en ce qu'un épaississement (19, 20) est prévu à l'extrémité libre de chaque branche (5, 9) du L, du côté tourné vers l'autre branche, afin de servir de butée lorsque la totalité de la course offerte par l'élasticité du bloc (1) a été atteinte.

7. Dispositif selon l'une des revendications 1 à 6, caractérisé en ce que la bloc (1) est réalisé d'une seule pièce par moulage en élastomère ou en caoutchouc.

8. Ensemble de roues jumelées faisant application du dispositif selon l'une des revendications 1 à 7, caractérisé en ce que le perçage (6) de la branche horizontale du L est traversé par un axe (7) commun à deux roues jumelées (8) disposées de part et d'autre dudit bloc (1).

9. Ensemble de roues jumelées selon la revendication 8, caractérisé en ce que ledit bloc (1) forme entretoise entre les moyeux 8a desdites roues jumelées (8).

**Patentansprüche**

1. Aufhängevorrichtung zur Zwischenschaltung zwischen ein Fahrgestell eines Fahrzeugs niedriger Geschwindigkeit und geringen Gewichts, wie eines Kinderwagens, und ein Laufwerk (8), mit einem Block (1) aus elastischem Material, der einerseits mit Mittel zur Befestigung am Fahrgestell und anderseits mit Mittel zur Befestigung auf einer Achse (7) des Laufwerks (8) versehen ist, dadurch gekennzeichnet, daß zur Erreichung einer sanfteren Aufhängung und Verlängerung der Lebensdauer des Blocks letzterer eine im allgemeinen L-förmige Gestalt aufweist, dessen horizontaler Schenkel (5) an seinem freien Ende (5a) ein durchgehendes, zur Mittelebene (21) des L querlaufendes Loch (6) aufweist, das zur Aufnahme der Achse (7) des Laufwerks (8) bestimmt ist, und dessen vertikaler Schenkel (9) Mittel zur Befestigung des Blocks am Fahrgestell des Fahrzeugs umfaßt, mit der Maßgabe, daß der Block bei der Absorption von sowohl vertikalen Stößen als auch solchen Stößen, die ein Schwenken der Achse des Laufwerks verursachen können, Verformungen unterworfen wird, die zumindest über die gesamte Masse des horizontalen Schenkels (5) sowie die Verbindungsteils (12) zwischen den beiden Schenkeln des L im wesentlichen gleichmäßig verteilt sind.

2. Vorrichtung nach Anspruch 1, dadurch gekennzeichnet, daß die Mittel zur Befestigung des Blocks (1) am Fahrgestell ein Zapfensackloch (10) aufweisen, welches der Länge nach im vertikalen Schenkel (9) des L, ausgehend von der Endfläche (11) dieses Schenkels, vorgesehen ist und zur Aufnahme eines entsprechenden Zapfens (13 oder 16) des Fahrgestells des Fahrzeugs bestimmt ist.

3. Vorrichtung nach Anspruch 1, dadurch gekennzeichnet, daß die Mittel zur Befestigung des Blocks (1) am Fahrgestell im Falle eines um eine vertikale Achse schwenkenden Laufwerks (8) eine starre Achse (16) umfassen, die im vertikalen Schenkel (9) des L verankert ist und sich nach außen in Verlängerung dieses vertikalen Schenkels über die Endfläche (11) desselben hinaus erstreckt, wobei diese Achse zum Zusammenwirken mit einem Schwenk- und Axiallager des Fahrgestells bestimmt ist.

4. Vorrichtung nach einem der Ansprüche 2 oder 3, dadurch gekennzeichnet, daß sich das Zapfensackloch (10) bzw. die starre Achse (16) senkrecht zum querlaufenden Loch (6) des horizontalen Schenkels (5) des L erstrecken.

5. Vorrichtung nach einem der Ansprüche 1 bis 4, dadurch gekennzeichnet, daß die beiden Schenkel (5 und 9) des L von im wesentlichen gleicher Länge sind.

6. Vorrichtung nach Anspruch 5, dadurch gekennzeichnet, daß eine Verdickung (19, 20) am freien Ende jedes Schenkels (5, 9) des L auf der zum anderen Schenkel gerichteten Seite vorgesehen ist, um als Anschlag zu dienen, wenn der gesamte durch die Elastzität des Blocks (1) gegebene Weg erreicht ist.

7. Vorrichtung nach einem der Ansprüche 1 bis 6, dadurch gekennzeichnet, daß der Block (1) in einem Stück durch Gießen aus einem Elastomer oder aus Gummi hergestellt ist.

8. Zwillingsräderanordnung unter Verwendung der Vorrichtung nach einem der Ansprüche 1 bis 7, dadurch kennzeichnet, daß das Lock (6) des horizontalen Schenkels des L von einer den beiderseits des Blocks (1) angeordneten Zwillingsrädern (8) gemeinsamen Achse (7) durchsetzt ist.

9. Zwillingsräderanordnung nach Anspruch 8, dadurch gekennzeichnet, daß der Block (1) ein Distanzstück zwischen den Naben (8a) der Zwillingsräder (8) bildet.

## Claims

1. Suspension device for insertion between the chassis of a vehicle of low speed and light weight such as a perambulator, and a bearing member (8), of the type comprising a block of elastic material (1) provided on the one hand, with means for securing it to the chassis and, on the other hand, means for securing it on an axle (7) of the bearing member (8), characterized in that, to increase the softness of the suspension, and to improve the working life of the block, said latter has the general shape of an L the horizontal branch (5) of which is provided at its free end (5a), with a through hole (6) transversal to the median plane (21) of the L, said hole being designed to receive the axle (7) of the bearing member (8), the vertical branch (9) of the L comprising the means by which the block is secured to the vehicle chassis so that, when the block absorbs and the vertical shocks and the shocks tending to cause the axle of the bearing member to tilt, said block is subjected to deformations distributed substantially evenly at least over the whole mass of the horizontal branch (5) as well as of the joining part (12) between the two branches of the said L.

2. Device according to claim 1, characterized in that the means for securing the block (1) to the chassis comprises a blind hole (10) provided longitudinally in the vertical branch (9) of the L from the end face (11) of said branch, said slot being designed to receive a corresponding tenon (13 or 16) of the vehicle chassis.

3. Device according to claim 1, characterized in that, in the case where the bearing member (8) is of the type pivoting about a vertical axis, the means for securing the block (1) to the chassis comprise a rigid axle (16) anchored in the vertical branch (9) of the L and extending outwardly and the extension of said vertical branch beyond the end face (11) of the latter, said axle being designed to cooperate with a pivoting and abutting bearing of the chassis.

4. Device according to one of claims 2 or 3, characterized in that the blind slot (10) or the rigid axle (16) extends orthogonally with respect to the transverse hole (6) of the horizontal branch (5) of the L.

5. Device according to one of claims 1 to 4, characterized in that the two branches (5 and 9) of the L are of substantially equal length.

6. Device according to claim 5, characterized in that a thicker portion (19, 20) is provided at the free end of each branch (5, 9) of the L, on the side facing the other branch, in order to act as an abutment when the full length offered by the elasticity of the block (1) is reached.

7. Device according to one of claims 1 to 6, characterized in that the block (1) is produced in one piece by molding in elastomer or in rubber.

8. Two-wheel assembly applying the device according to one of claims 1 to 7, characterized in that the hole (6) provided in the horizontal branch of the L receives an axle (7) which is common to two paired wheels (8) disposed on either side of said block (1).

9. Two-wheel assembly according to claim 8, characterized in that the said block (1) forms a cross-member between the hubs 8a of the said paired wheels (8).

Fig. 1

Fig. 2

Fig. 3

Fig. 4

Fig. 5